# EUROPÄISCHE PATENTSCHRIFT

(11) **EP 1 329 343 B1**
(45) Veröffentlichungstag und Bekanntmachung des Hinweises auf die Patenterteilung: **28.02.2007**
(21) Anmeldenummer: 03000910.4
(22) Anmeldetag: 16.01.2003
(51) Int. Cl.: B60G 7/00, F16C 7/02, F16C 11/06, F16F 1/393

(54) **Konstruktionselement, insbesondere für die Lenkgeometrie von Strassenfahrzeugen**
Constructional element, especially for the steering geometry of road vehicles
Elément de construction, notammment pour la géométrie de la direction de véhicules routiers

(30) Priorität: 22.01.2002 DE 10202403; 29.11.2002 DE 10255813
(43) Veröffentlichungstag der Anmeldung: 23.07.2003
(73) Patentinhaber: REMPEL Stanztechnik GmbH & Co. KG, 58815 Plettenberg (DE)
(72) Erfinder: Giersdorf, Klaus, 58840 Plettenberg (DE)
(74) Vertreter: Valentin, Ekkehard

(56) Entgegenhaltungen:
- EP-A- 0 351 689
- EP-A- 0 479 598
- EP-A- 0 819 556
- EP-A- 1 092 891
- DE-A- 4 132 779
- DE-C- 575 296
- DE-C- 3 921 468
- US-A- 1 817 529
- US-A- 4 146 340
- US-A- 4 189 249
- US-B1- 6 241 267
- PATENT ABSTRACTS OF JAPAN Bd. 0080, Nr. 32 (M-275), 10. Februar 1984 (1984-02-10) -& JP 58 188712 A (NISSAN JIDOSHA KK; others: 01), 4. November 1983 (1983-11-04)
- PATENT ABSTRACTS OF JAPAN Bd. 1998, Nr. 01, 30. Januar 1998 (1998-01-30) & JP 9 254621 A (YAMAKAWA IND CO LTD), 30. September 1997 (1997-09-30)
- PATENT ABSTRACTS OF JAPAN Bd. 2000, Nr. 06, 22. September 2000 (2000-09-22) -& JP 2000 071730 A (SUZUKI MOTOR CORP), 7. März 2000 (2000-03-07)

## Beschreibung

Konstruktionselement, insbesondere für die Lenkgeometrie von Straßenfahrzeugen

Die Erfindung betrifft ein Konstruktionselement der Lenkreinrichtung eines Fahrzeugs, insbesondere eine Spurstange/Querlenker mit mindestens einem wenigstens ein Befestigungselement aufweisenden Gelenkkopf mit einem diesen kraft-und/oder formschlüssig umfassenden Gehäuse und einem daran anordenbaren Schaft, insbesondere für die Ausbildung der Lenkgeometrie eines Fahrzeugs bzw. zum Anschluss von Gelenkstützen bspw. zwischen einer schwingbaren Achse und einem Fahrgestell, wobei der Gelenkkopf mit Kugelstück und Befestigungselementen und/oder das Gehäuse mit Schaft aus insbesondere schalenförmigen Blechpressteilen zusammengefügt sind, die im Bereich jeweils einer Trennebene unter Ausbildung wenigstens teilweise hohler Elemente miteinander fest verbunden, insbesondere mindestens partiell verschweißt sind.

Die passive Sicherheit von Kraftfahrzeugen betrifft alle konstruktiven Vorkehrungen und technischen Merkmale, die helfen sollen, das Fahrzeug sicherer und leichter zu machen. Hierzu gehören nicht nur besondere konstruktive Maßnahmen an der Fahrzeugkarosserie sondern auch im Fahrwerksbereich. Um die sogenannten ungefederten Massen der Fahrwerkskonstruktion so gering wie möglich zu halten, ist der Stand der Technik auf Hinterradachsführungen aus geschmiedetem Aluminium ausgewichen.

Herkömmliche Bauteile von Lenkeinrichtungen für Kfz-Fahrwerke, beispielsweise Querlenker, umfassen zum Beispiel eine rohrförmige Spurstange, in deren Enden geschmiedete und spanend bearbeitete Aufnahmestücke für gummierte Kugelgelenkstücke unter Ausbildung eines Kugelgelenkes geschoben werden.
Die Verbindung zwischen dem Rohr und den Aufnahmestücken erfolgt dann in folgenden Arbeitsschritten:

Die Rohrenden werden induktiv erwärmt und anschließend werden die vorbearbeiteten Schäfte der Endstücke in das Rohr geschoben und über eine Pressverbindung formschlüssig verbunden, wobei der Schrumpfprozess beim Abkühlen des induktionserwärmten Rohres die Haltbarkeit der Verbindung unterstützt.

Erfahrungsgemäß kann bei diesem Verfahren jedoch nur eine Toleranz beim Mittenabstand der Kugelstücke von +/- 2,5 mm eingehalten werden. Weil aber diese Toleranz für die exakte Spureinstellung zu groß ist, um ein sicheres Fahrverhalten des Fahrzeugs zu gewährleisten, muß auf einer Seite der Spurstange ein Verstellmechanismus eingesetzt werden, welcher z. B. eine Doppelgewindemuffe und eine Klemmschelle umfaßt, die nach Verspannen der Klemmschelle mit 90 bis 120 kN die eingestellte Spur halten soll.

Diese Verbindung ist jedoch verhältnismäßig instabil, weil die Klemmkräfte infolge von Reibungsverlusten nicht ausreichen, die Spur unter allen Umständen während der Lebensdauer des Bauelementes in den eingestellten Toleranzen zu halten. Die Spur muß infolgedessen mehrfach nachjustiert werden. Dabei erfolgt das Verspannen des gummierten Kugelstückes im Gelenk über einen Seegerring, der in eine Ringnut eingreift.

Das bekannte System hat eine Reihe von Nachteilen:
- Durch Dauerlastschwingungen kann sich der Seegerring aus seiner Nut in den Aufnahmestücken herausarbeiten, womit das System bezüglich der Fahrgeräuschabsorbierung unwirksam und infolge Verlustes der Spurhaltung der Lenkgeometrie unfallgefährdend wird.
- Weiterhin tritt eine plastische Verformung im Bauteil auf, wobei die aufvulkanisierte Kugelschale am Gummipaket bei Extrembelastung sporadisch bricht, und zwar im Öffnungsbereich der Seegerringe.
- Weiterhin kann das in der Lenkgeometrie eingebaute geschmiedete und spanend bearbeitete Kugelstück im Übergangsbereich von Kugeldurchmesser und Zapfendurchmesser sporadisch brechen, womit der Totalausfall des Querlenkers bei erheblicher Unfallgefahr eintritt.
- Als zusätzliche Verschleißerscheinung kann hinzu kommen, dass die Gummierung nach längeren Betriebsstunden im Bereich vom Scheitelpunkt Kugelstück /Kugelschale zerbröselt.

Ein weiterer dokumentarisch belegter Stand der Technik zeigt folgendes:

Das Dokument DE 39 21 468 C1 beschreibt einen Lenker für Radaufhängungen von Kraftfahrzeugen, der aus zwei identischen Pressformteilen mit insgesamt U-förmigem Querschnitt gebildet ist, die an einem Ende und aufeinander zugerichtet jeweils einen Ringkragen haben. Die Ringkrägen berühren sich mit ihren Rändern. In diese beiden Ringkrägen ist ein Lagerelement fest eingepresst. Am anderen Ende des Lenkers sind in dessen Stegbereich Durchbrechungen für den Durchtritt eines Lagerbolzens vorgesehen. Infolge der losen Berührung der Ringkrägen zeigt sich eine Instabilität des Lenkers bei großen Kräften und Torsionsmomenten.

Aus dem Dokument DE 31 09 565 A1 ist ein Führungslenker für eine Radaufhängung von Kraftfahrzeugen bekannt, der aus zwei gewölbten Blechpressteilen besteht, die formschlüssig miteinander verbunden sind und an den Enden Lageröffnungen aufweisen. Die Blechpressteile haben entlang ihres Umfangs überlappende Ränder, die sich hintergreifen. Da die Blechpressteile nicht miteinander verschweißt sind, erfordert der Presssitz höchste Fertigungsgenauigkeit, was die Herstellung dieses Führungslenkers erheblich verteuert.

Das Dokument EP 0 296 568 A1 beschreibt einen Lenker aus U-förmig gepressten Stahlblechen mit angeformten Verbindungsflanschen. Jede Halbschale des Stahlblechs weist quer zu dessen Längsachse halbzylinderförmige Ausnehmungen auf, die aufeinander gelegt, die Außenbuchse für ein Lagerelement bilden, welches durch einen Sicherungsring arretiert wird. Sämtliche Verbundflansche werden miteinander verschweißt. Die Verschweißung erfolgt mittels Laser- oder Elektronenstrahlen bzw. Miniplasma. Die Fertigung der Stahlpressteile mit umlaufenden Flanschen und die Verschweißung der großflächigen Flansche ist sehr kostenträchtig und aufwendig.

Das Dokument DE 29 52 176 A1 beschreibt einen Führungslenker für Radaufhängungen von Kraftfahrzeugen aus länglichen Blechpressteilen, die endseitig Führungshälse für Lagerelemente aufweisen. Die Seitenwände jedes Blechpressteils sind über ihre im Durchmesser unterschiedlich großen, ineinander einpressbaren Führungshälse verbunden, wobei die im Durchmesser größeren Hälse die im Durchmesser kleineren Hälse auf ihrer gesamten Länge übergreifen. Der Presssitz der Blechteile erfordert eine hohe Fertigungsgenauigkeit, garantiert jedoch keine ausreichende Stabilität bei großen Belastungen.

Aus dem Dokument JP 58 188 712 A ist eine Lenkvorrichtung für eine Fahrzeug bekannt, welches aus zwei Blechpressteilen besteht und an deren Enden ein Gabelkopf ausgebildet ist. In jedem Gabelkopf ist ein Befestigungsbolzen eingebettet, welcher in einer Gummibuchse gelagert ist.

Im Dokument EP A 1 092 891 ist eine Buchse für Streben oder Stützen der Radaufhängung von Fahrzeugen und insbesondere zur Anwendung in luftgefederten Aufhängungssystemen für LKWs bekannt, wobei die Buchse eine äußere metallene Hülse, ein metallenes mittiges Teil, eine stoßdämpfende Gummischicht, die zwischen der Hülse und dem mittigen Teil angeordnet ist und an die umliegenden Metalloberflächen vulkanisiert ist. Das mittige Teil weist einen dickeren Mittelbereich auf, welcher rotationssymmetrisch um die Längsachse geformt ist und im wesentlichen von der äußeren Hülse umfasst wird. Die Buchse weist auch zwei flügelartige Seitenteile auf, die sich in Richtung der Längsachse erstrecken. Das mittige Teile ist in zwei Hälften entlang einer Fläche, welche sich parallel zur genannten Längsachse ausdehnt, geteilt, so dass der genannte Mittelbereich zwei hohle Hälften aufweist, welche mit vollständigem Kontakt dazwischen zusammengefügt werden, so dass jedes der beiden flügelartigen Seitenteile ebenfalls zwei Hälften enthält. Die beiden genannten Hälften des mittigen Teiles werden durch Befestigungsteile fest zusammengehalten, welche sich durch Öffnungen oder Schlitze in jedem Seitenteil erstrecken.

Ein immer dichter und hektischer werdender Straßenverkehr mit immer schnelleren Fahrzeugen erfordert entschieden neue technische Maßnahmen für eine möglichst weitgehende Aufrechterhaltungsier passiven Fahrzeugsicherheit und damit der Verkehrssicherheit.

Es muß in besonderer Weise dafür gesorgt werden, dass die Fahreigenschaften eines Straßenfahrzeuges einem höchstmöglichen technischen Standard entsprechen, was insbesondere im Bereich der Lenkeinrichtung eines Fahrzeuges verbesserte Konstruktionen erfordert.

Ausgehend von diesen Überlegungen und dem aktuellen Stand der Technik liegt der Erfindung die Aufgabe zugrunde, Konstruktionselemente für die Ausbildung der Lenkgeometrie eines Fahrzeugs bzw. zum Anschluss von Gelenkstützen zwischen einer schwingbaren Achse und einem Fahrgestell wesentlich zu verbessern, um dadurch die vorgenannten Schwachstellen sowie Schwierigkeiten und Unzulänglichkeiten bei der bisherigen Standardausführung von Lenkeinrichtungen an Fahrzeugen sowohl im PKW als auch im LKW-Bereich zu überwinden.

Zur Lösung der Aufgabe wird mit der Erfindung bei einem Konstruktionselement der Lenkreinrichtung eines Fahrzeugs, insbesondere eine Spurstange/Querlenker mit mindestens einem wenigstens ein Befestigungselement aufweisenden Gelenkkopf mit einem diesen kraft- und/oder formschlüssig umfassenden Gehäuse und einem daran anordenbaren Schaft, insbesondere für die Ausbildung der Lenkgeometrie eines Fahrzeugs bzw. zum Anschluss von Gelenkstützen bspw. zwischen einer schwingbaren Achse und einem Fahrgestell, wobei der Gelenkkopf mit Kugelstück und Befestigungselementen und/oder das Gehäuse mit Schaft, aus insbesondere schalenförmigen Blechpressteilen zusammengefügt sind, die im Bereich jeweils einer Trennebene unter Ausbildung wenigstens teilweise hohler Elemente miteinander fest verbunden, insbesondere mindestens partiell verschweißt sind und dass der Gelenkkopf, umfassend das Kugelstück mit zwei antipodischen Befestigungselementen, aus zwei Kugelhalbschalen besteht, die an einer kugelhalbierenden Trennebene fest verbunden, ggf. verschweißt sind, vorgeschlagen, dass der Gelenkkopf, umfassend das Kugelstück mit zwei antipodischen Befestigungselementen, aus zwei Kugelhalbschalen besteht, die an einer kugelhalbierenden Trennebene fest verbunden, ggf. verschweißt sind und dass das Kugelstück und die davon auskragenden Befestigungselemente einen Einleger aus Dickblech enthalten, dessen seitliche Arme zu lastaufnehmenden Ösen geformt sind.

Weitere Ausgestaltungen der Erfindung sind entsprechend den Unteransprüchen vorgesehen.

Dabei ist eine Ausbildung der Erfindung dahingehend vorgesehen, dass in Abstandsbereichen zwischen Gelenkkopf und Gehäuse beim Gelenkkopf oder Teilen des Gehäuses aufvulkanisierte bzw. aufgeklebte Schichten aus elastischem Material wie Gummi oder Kunststoff vorhanden sind. Diese dienen insbesondere der Geräuschdämpfung.
Mit den weiteren, in den Unteransprüchen genannten erfindungsgemäßen Ausgestaltungen des Konstruktionselementes der Lenkeinrichtung eines Fahrzeuges werden eine Reihe von wesentlichen Verbesserungen und Erhöhung der Fahrzeugsicherheit verwirklicht. Diese Vorteile umfassen insbesondere:
1. Die Toleranz beim Mittenabstand von Kugelstück zu Kugelstück verringert sich auf ein zufriedenstellendes Maß von +/- 0,15 mm,
2. Infolgedessen kann ein Verstellmechanismus entfallen und damit auch das Erfordernis mehrfacher Nachjustierung der Spur,
3. Ein Spezialverschluß zum Vorspannen und Verbinden am Qüarlenker-Kugelgelenk ermöglicht eine lückenlose Umschließung eines vorgespannten Gummipaketes, sodass ein Systemausfall durch Ausrasten eines verschobenen Seegerringes verhindert wird
4. Da die hauptsächlichen Konstruktionselemente der Lenkeinrichtung im Tiefziehverfahren aus Blech hergestellt sind, wird keine spanende Nachbearbeitung erforderlich.
5. Weil die Tiefziehoperationen in Richtung des Faserverlaufes erfolgen, sind Brüche der Kugelstücke im Übergangsbereich Kugeldurchmesser / Schaftdurchmesser mit Sicherheit auszuschließen.
6. Durch vollständige Gummierung, respektive Ausschäumung des Lenkers mit Al-Schaum, ist eine deutliche Verringerung der Fahrgeräuschabsorption gegeben.
7. Durch weitgehende Umfassung des Kugelstückes in einer Gummipackung wird die Gefahr einer Zerbröselung der Gummierung deutlich vermindert.
8. Durch Tiefziehtechnik der Blechteile wird eine Gewichtserspamis der schwingenden Massen von ca. 40 % gegenüber der herkömmlichen Bauweise erzielt.
9. Durch die Plasmaverschweißung der halbschalenförmigen Blechpressteile an ihrer Trennebene und durch die Passsitz-Verbindung an ihren Enden wird eine besonders hohe Stabilität des Lenkers und passgenaue Durchzüge für die Lagerstellen gewährleistet.

Eine besonders vorteilhafte Ausgestaltung des Konstruktionselementes nach der Erfindung sieht vor, dass es mit einer am Schaft einstückig unter Ausbildung eines Gehäuses vorhandenen Verbreiterung den Gelenkkopf umfaßt, der als Kugelstück mit quer zum Schaft angeordneten Befestigungselementen ausgebildet und mit einer ihn umhüllenden Packung aus elastischem Material wie Gummi oder Kunststoff versehen ist. Diese Bauart ergibt eine hohe Verfügbarkeit der Lenkeinrichtung, praktisch ohne Verschleiß.

Mit einer besonders zweckmäßigen Ausgestaltung der Erfindung wird vorgeschlagen, dass die Verbreiterung am Ende eines jeden Blechpressteils einen das Kugelstück aufnehmenden Hohlzylinder mit unterschiedlich großem Durchmesser umfasst, wobei die Innenwand des Hohlzylinders des einen Blechpressteils die Außenwand des Hohlzylinders des anderen Blechpressteils zumindest teilweise achsfluchtend übergreift. Zweckmäßig stehen die Außenwand und die übergreifende Innenwand mit einem Passsitz formschlüssig in Verbindung.

Die Erfindung wird anhand von konstruktiven Beispielen für das Konstruktionselement näher erläutert. Es zeigen:
- Figur 1: in Perspektive einen Querlenker mit Gelenkkopf und fester Länge,
- Figur 2: in Perspektive einen Querlenker mit Gelenkkopf und variabler Länge,
- Figur 3a: den Querlenker mit fester Länge in Draufsicht,
- Figur 3b: den Querlenker in Seitenansicht,
- Figur 3c: den Querlenker in Perspektive,
- Figur 4: eine Halbschale des Querlenkers mit fester Länge in Seitenansicht,
- Figur 4a: die Halbschale, teils im Schnitt und teils in Draufsicht,
- Figur 4b: eine Halbschale des Querlenkers mit Hohlzylinder-Durchzug für den Gelenkkopf,
- Figur 4c: die Halbschale nach Fig. 4b mit teilweise aufgeweitetem Hohlzylinder,
- Figur 4d: den Querlenker, bestehend aus den Halbschalen gemäß Fig. 4b und Fig. 4c mit Passsitz für den Hohlzylinder-Durchzug,
- Figur 5a: einen Querlenker mit Gelenkkopf und variabler Länge, in Draufsicht,
- Figur 5b: den Querlenker nach Fig. 5a in Seitenansicht,
- Figur 5c: den Querlenker nach Fig. 5a und Fig. 5b in Perspektive,
- Figur 6: den Querlenker in verlängertem Zustand, in Perspektive,
- Figur 6a: einen Gelenkkopf des Querlenkers nach Fig. 6 in Draufsicht, und im Schnitt einer Horizontalebene,
- Figur 6b: den Gelenkkopf nach Fig. 6a im Schnitt einer Vertikalebene,
- Figur 7a: eine Halbschale des Gelenkkopfes, in Draufsicht,
- Figur 7b: die Halbschale des Gelenkkopfes nach Fig. 7a in Seitenansicht,
- Figur 7c: die Halbschale des Gelenkkopfes nach Fig. 7a und Fig. 7b in Perspektive,
- Figur 7d: ein gebördeltes Endstück der Halbschale,
- Figur 8: die Arretier-Buchse für den Gelenkkopf im Schnitt
- Fig. 8a: die Arretier-Buchse, in Perspektive,
- Figur 9: einen Gelenkkopf eines Querlenkers im Schnitt einer Horizontalebene,
- Figur 10: den Gelenkkopf nach Fig. 9 mit Gummipackung, in Perspektive,
- Figur 11: den Gelenkkopf nach Fig. 10 im Schnitt einer Vertikalebene, mit Einleger
- Figur 12: einen Gehäusering des Gelenkkopfes, im Schnitt einer Mittelebene,
- Figur 13: den Gehäusering in Seitenansicht,
- Figur 14: eine Tiefziehhälfte (Kugelhalbschale) des Gelenkkopfes, vertikal geschnitten,
- Figur 15: die Kugelhalbschale nach Fig. 14 im Horizontalschnitt,
- Figur 16: die Kugelhalbschale nach Fig. 14 bzw. Fig. 15 in Draufsicht,
- Figur 17,: die Kugelhalbschalen zusammengebaut zum Kugelstück mit Einleger, Gummipaket und Gehäuseringen,
- Figur 18: die Kugelhalbschalen des Gelenkkopfes nach Fig. 17 in Draufsicht,
- Figur 19: Kugelhalbschalen, mit konischen Enden, zusammengebaut und gedrückt,
- Figur 20: die Kugelhalbschalen mit Druckstellen nach Fig. 19 in Draufsicht,
- Figur 21: Kugelhalbschalen mit runden Ausbuchtungen im Schnitt einer horizontalen Ebene,
- Figur 22: die Kugelhalbschalen nach Fig. 21 in Draufsicht,
- Figur 23: Kugelhalbschalen mit geänderter Formgebung der Druckstellen im Schnitt,
- Figur 24: die Kugelhalbschalen nach Fig. 23 in Draufsicht,
- Figur 25: die Kugelhalbschalen nach Fig. 23 bzw. Fig. 24 in Ansicht schräg von unten.
- Figur 26: den Einleger für das Kugelstück in einer Seitenansicht,
- Figur 27: den Einleger nach Fig. 26 in einer Draufsicht.
- Figur 28: einen Querlenker mit fester Länge in Form eines perspektivischen exploded view,
- Figuren 29a bis 29e: Folgen von Arbeitsgängen für die Montage eines Kugelkopfes am Querlenker.

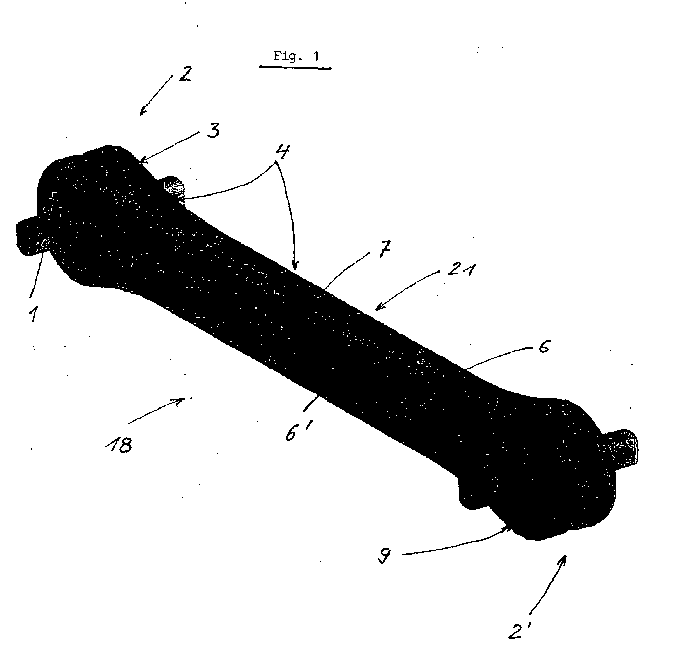

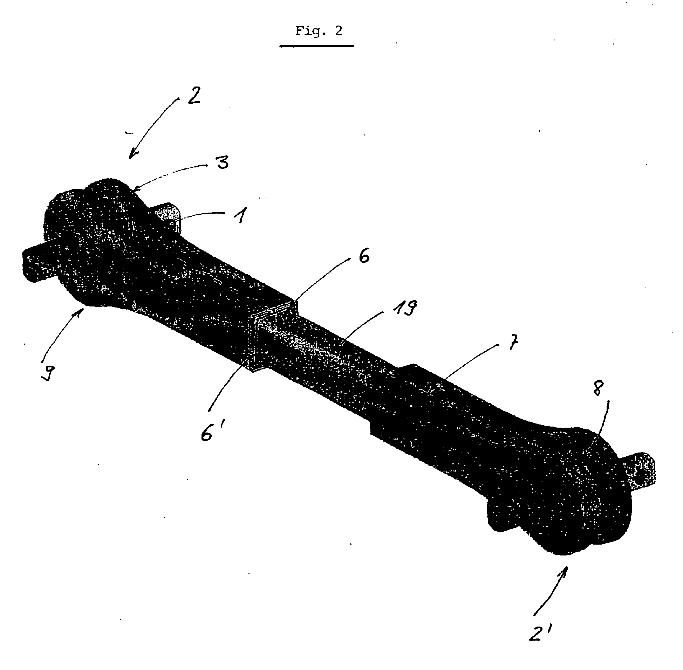

Figur 1 und Figur 2 zeigen in perspektivischer Darstellung als Konstruktionselement einer KFZ-Lenkeinrichtung einen Querlenker 18 mit fester Länge (Fig. 1) bzw. mit variabler Länge (Fig. 2). Der Querlenker umfaßt an beiden Enden die Gelenkköpfe 2, 2', die von einem Gehäuse 3 kraft- und/oder formschlüssig umgeben sind. An das Gehäuse 3 schließt sich der Schaft 4 an. Der Gelenkkopf (2) weist die Befestigungselemente 1, 1' auf, welche die Verbindung zu weiteren Konstruktionselementen der Lenkeinrichtung herstellen.

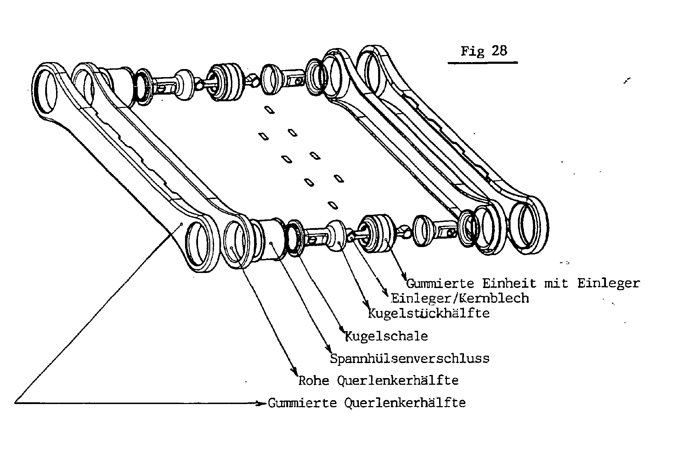

Der Gelenkkopf 2 wird von der Verbreiterung 9 des Gehäuses 3 umfaßt. Der Querlenker 18 besteht aus den Blechpressteilen 6, die entlang der Trennebene 7 zu einer rohrförmigen Einheit 21 verschweißt sind, siehe auch Fig. 28.

In Figur 2 ist der längsvariable Querlenker mit den Querlenkerhälften 20 perspektivisch dargestellt. Gut zu sehen ist hierbei die zwischen Gelenkkopf 2 und Gehäuse 3 aufvulkanisierte Schicht 8 aus gummielastischem Material.

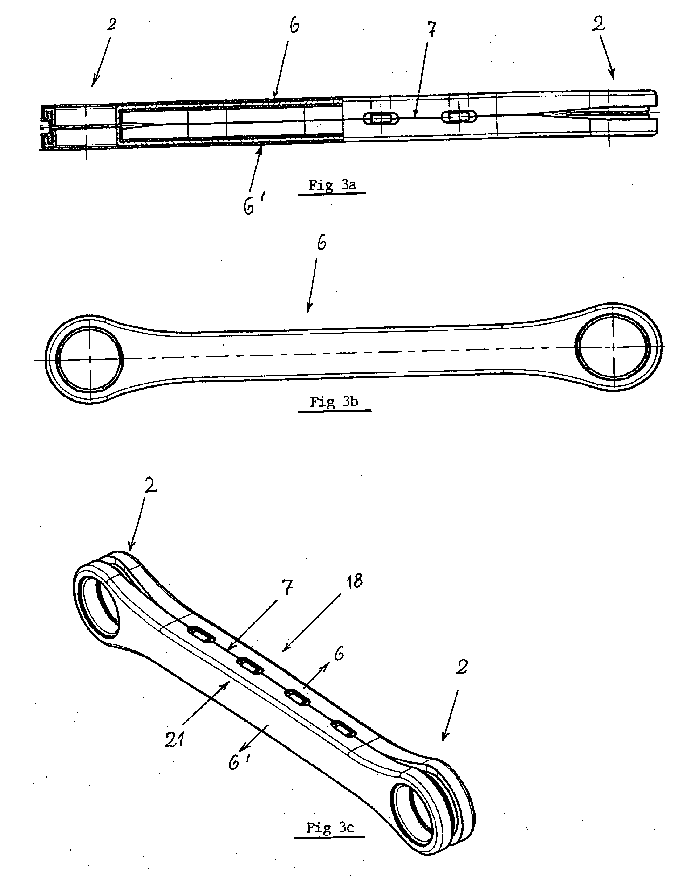

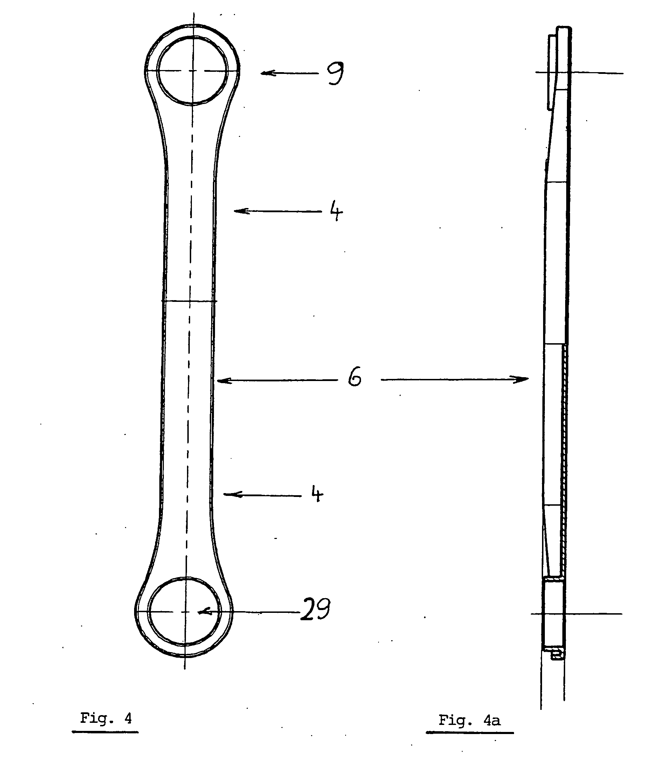

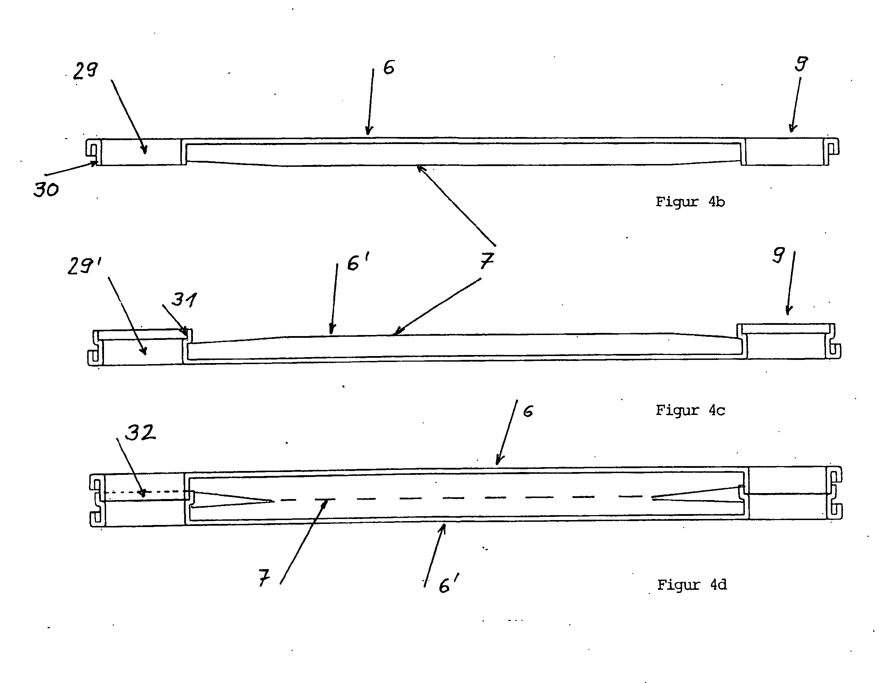

Die Figur 3a bis 3c zeigen den Querlenker 18 als Pressblechteil 6, zusammengefügt zu einer rohrförmigen Einheit 21 ohne Gelenkkopf. Die Kopfenden haben einen Zwischenraum von ca. 2 mm, damit eine Verspannung im E-Modulbereich des Materials möglich ist. In Fig. 4 ist die Halbschale des Blechpressteils 6 zu sehen.

Die endseitige Verbreiterung 9 der Querlenker-Halbschale 6 ist zu einem Hohlzylinder 29 ausgeformt, der identisch dem Hohlzylinder 29' der anderen Halbschale 6' nachgebildet ist. Sind beide Halbschalen 6, 6' zum Querlenker verbunden, stehen sich die Stirnseiten der Hohlzylinder achsfluchtend aber beabstandet gegenüber und nehmen den Gelenkkopf 2 fest umschließend auf.

In den Figuren 4b und 4c sind die Querlenker-Halbschalen 6, 6' gezeigt mit endseitigen Hohlzylindern 29, 29', die an ihren gegenüberliegenden Stirnseiten unterschiedlich große Durchmesser aufweisen. Die Innenwand 31 des Hohlzylinders 29' hat einen größeren Durchmesser mit einer Eintauchtiefe 32. Dieser Innendurchmesser 31 entspricht mit Passsitztoleranz dem Außendurchmesser 30 des anderen Hohlzylinders 29.

Fig. 4d zeigt den aus den Halbschalen 6, 6' verbundenen Querlenker. Die Halbschalen sind entlang der gestrichelten Trennebene 7 mittels Hochtemperaturplasma, vorzugsweise mit einem düsenfernen Wirkfocus verschweißt. Die Verschweißung endet mit Abstand vor der Verbreiterung 9 mit den Hohlzylindern 29, 29'. Letztere sind mit einem Passsitz entlang der Eintauchtiefe 32 verbunden. Diese Maßnahmen ergeben zusammen ein Höchstmaß an Stabilität und Verwindungssteifigkeit. Die Führung des Gelenkkopfes in den Hohlzylindern ist äußerst genau.

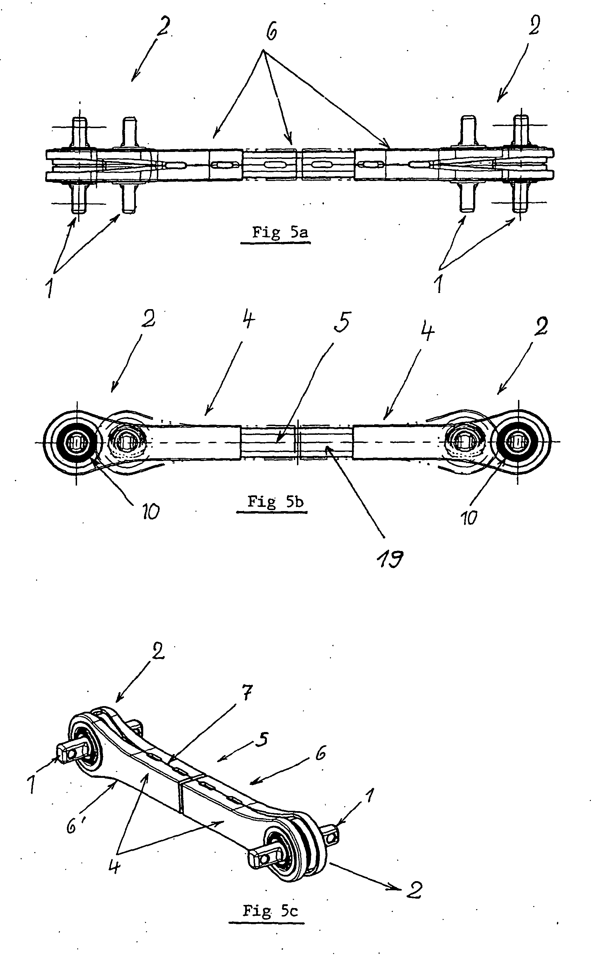

Die Figuren 5a bis 5c zeigen den Querlenker 18 mit variabler Länge in zwei Längenpositionen. Der jeweilige Querlenkerschaft 4 ist auf einem Distanzstück 19 verschiebbar und einstellbar. Das Distanzstück kann im Außenbereich mit den Halbschalen 6 oder im Innenbereich der Halbschalen 6 verschweißt sein.

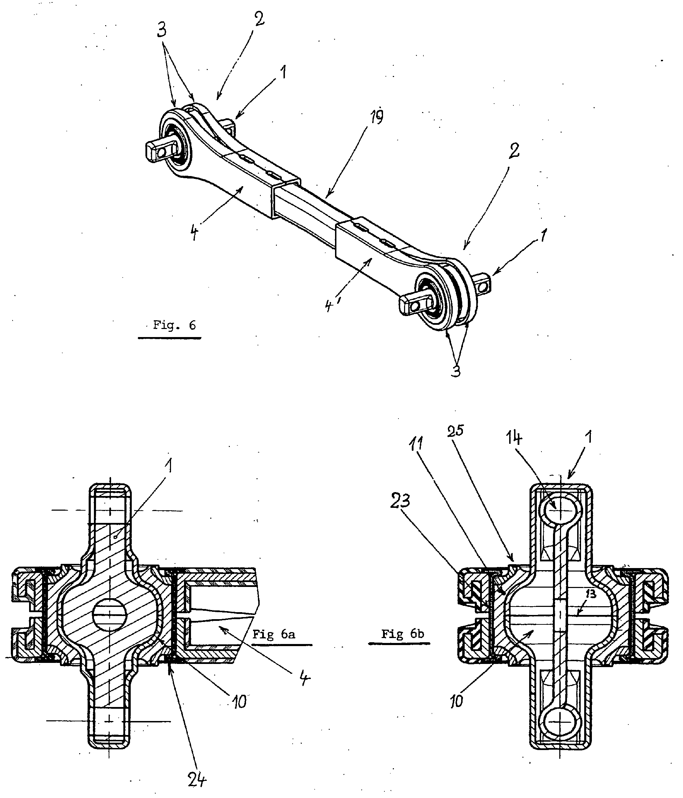

Fig. 6 zeigt den Querlenker im verlängerten Zustand. Fig. 6a zeigt den Gelenkkopf des Querlenkers in Draufsicht und im Schnitt einer Horizontalebene. Mit der Ziffer 11 ist beispielsweise in Figur 6b eine elastische Gummipackung gezeigt, die das Kugelstück 10 innerhalb des Gehäuses 3 umgibt. Dabei zeigt Fig. 6b den Gelenkkopf im Schnitt einer Vertikalebene.

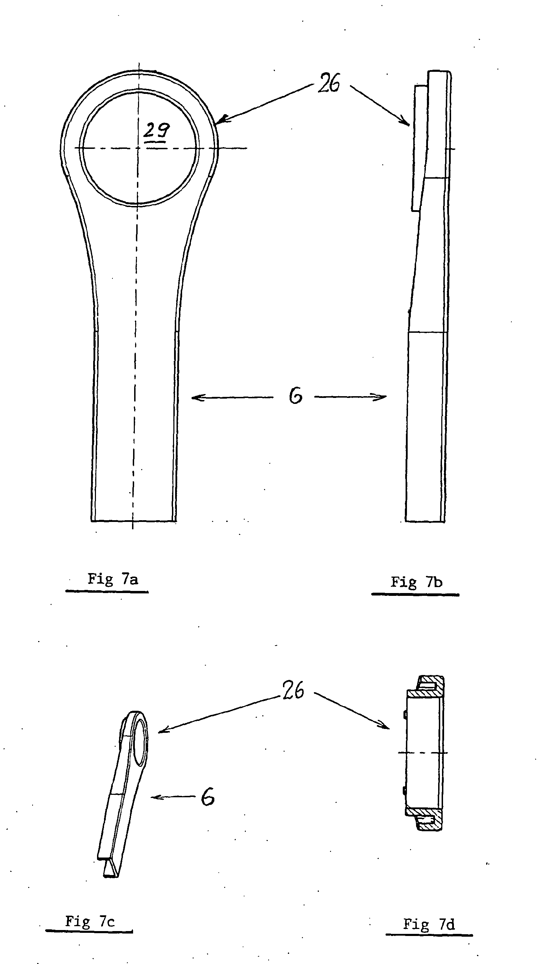

Weiterhin zeigt Fig. 7a eine Halbschale des Gelenkkopfes in Draufsicht mit dem Blechpressteil 6 und dem Gehäuseendteil 26. Entsprechend den weiteren Figuren 7b bis 7c. Fig. 7d ist das gebördelte Endstück der Halbschale dargestellt.

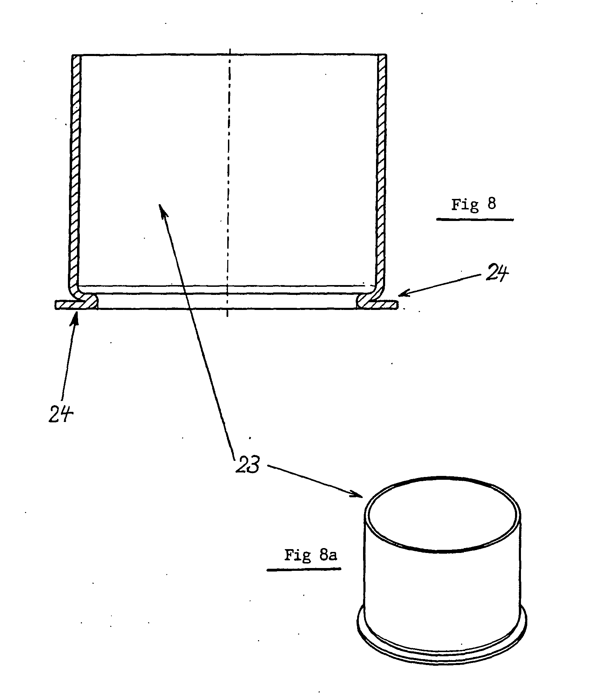

Die Figuren 8 bzw. 8a zeigen, entsprechend der Darstellung in Fig. 6b, eine die elastische Packung 11 und den Gehäusering 25 umgebende Spannhülse 23 aus vergleichsweise dünnwandigem Stahlblech, die in montiertem Zustand an beiden Enden Bördelränder 24 aufweist, womit das Kugelstück 10 innerhalb des Gehäuses 3 in sicherer Position unveränderbar gehalten wird.

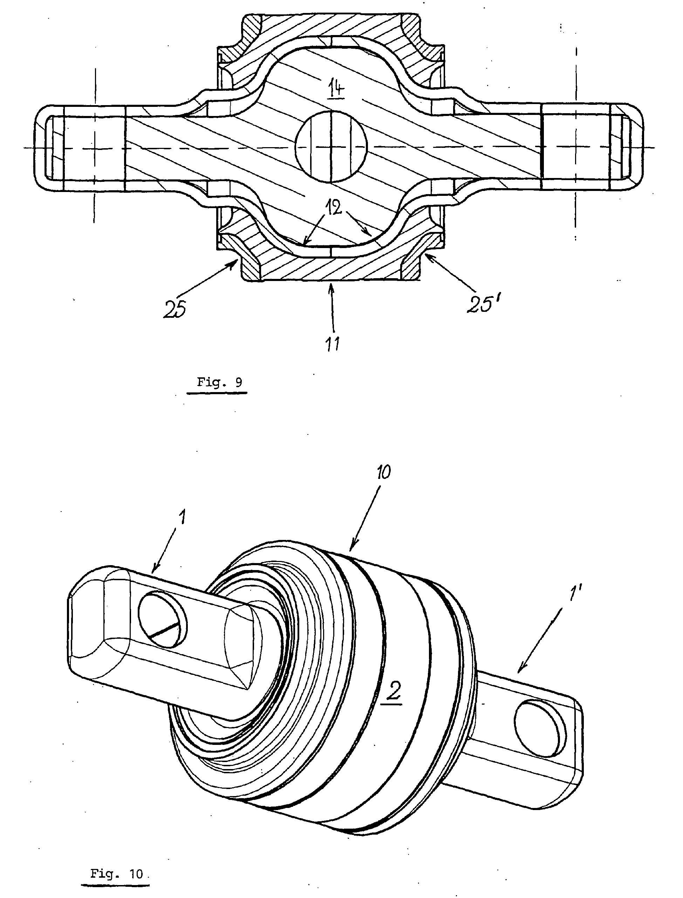

Die Figuren 9 und 10 zeigen den Gelenkkopf 2 eines Querlenkers mit Kugelstück 10 und mit den Befestigungselementen 1, 1' zunächst im Schnitt einer Horizontalebene, sowie perspektivisch. In Fig. 9 zeigt das Bezugszeichen 11 eine elastische Packung, umgeben von Gehäuseringen 25 bzw. 25'.

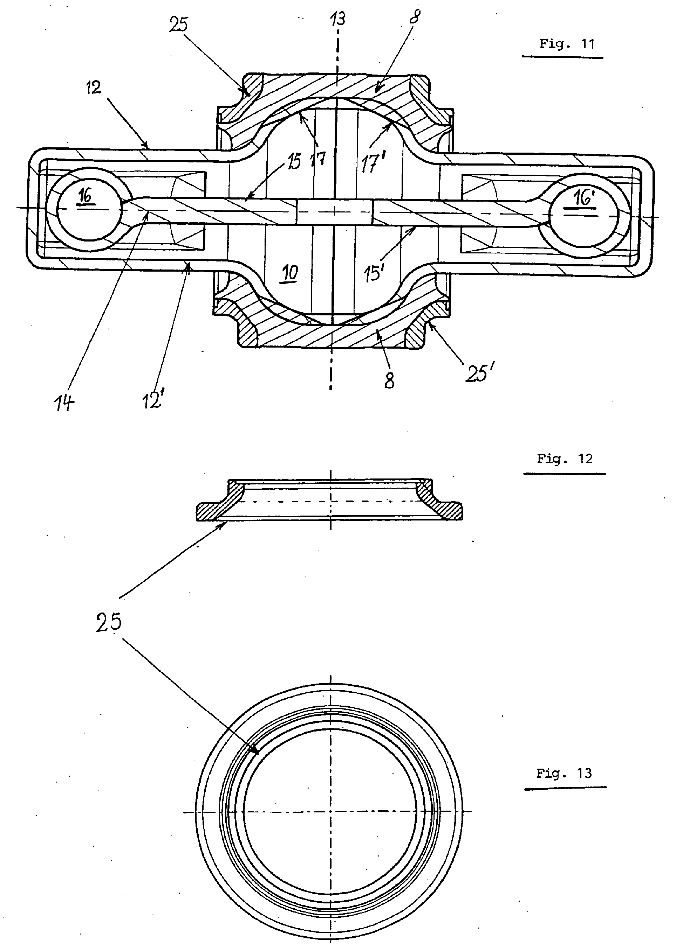

Daran anschließend zeigen die Figuren 11 bis 13 den Gelenkkopf im Schnitt einer Vertikalebene, mit Einleger 14 in Dickblech aus Stahl mit endseitigen Ösen 16, 16' innerhalb der Kugelhalbschalen 12, 12', die nach Zusammenfügen an der querliegenden Trennebene 13 das Kugelstück 10 ausbilden. Dieses ist umgeben von einer elastischen Schicht 8 innerhalb der Gehäuseringe 25, 25'.
Dabei kann, entsprechend einer weiteren vorteilhaften Ausgestaltung, der Hohlraum zwischen dem Einleger 14 und dem Schalenbereich 17,17' des Kugelstükkes 10 mit Aluminium ausgeschäumt sein. Der Gelenkkopf ist an beiden Enden einer Spurstange 5, 18, mit fester oder variabler Länge angeordnet, wie dies beispielsweise den Figuren 1 bis 6 entnehmbar ist. Eine solche Spurstange bzw. Querlenker besitzt beispielsweise jeweils zwei auf einem rohrförmigen Distanzstück 19 abstandsveränderlich teleskopierend einschiebbare Schäfte 4, 4' wie dies in Fig. 2 bzw. 5a bis 5c dargestellt ist.

Der das Kugelgelenk aufnehmende Querlenker 18 mit fester Länge gemäß Fig. 1 bzw. Fig. 3c, und die variablen Querlenkerhälften 20, 20' gem. Fig. 2 bestehen aus je zwei zu einer rohrförmigen Einheit 21 zusammenfügbaren, halbschalenförmigen Blechpressteilen 6, 6'.

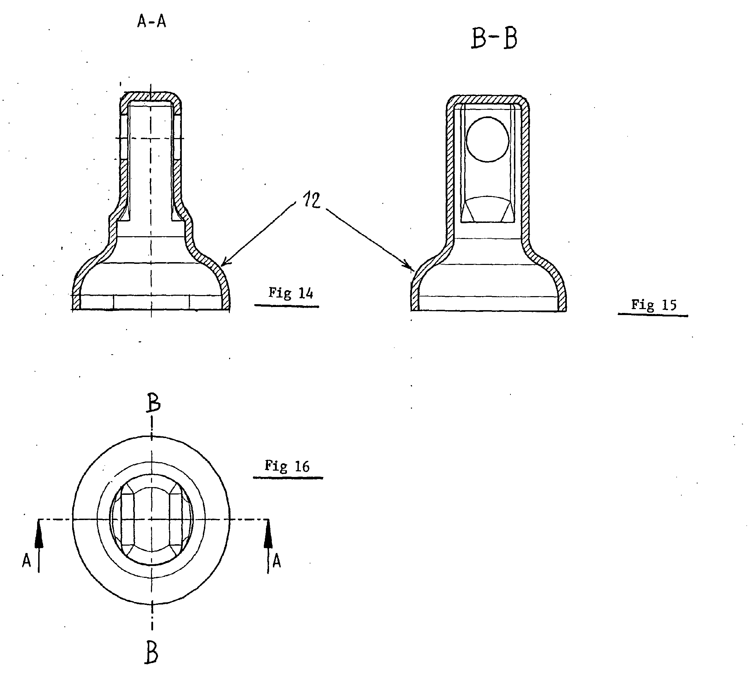

Die Figuren 14 bis 16 zeigen je eine tiefgezogene Kugelhalbschale 12 des Kugelstücks 10 in einer Schnittebene A-A bzw. B-B im Vertikalschnitt und im Horizontalschnitt. Die Fig. 16 zeigt die Kugelhalbschale 12 in Draufsicht.

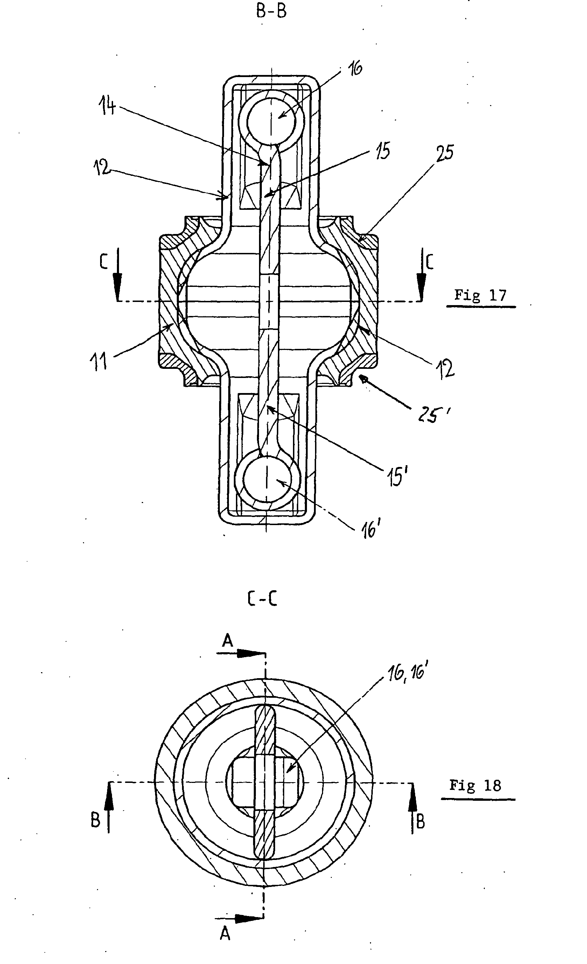

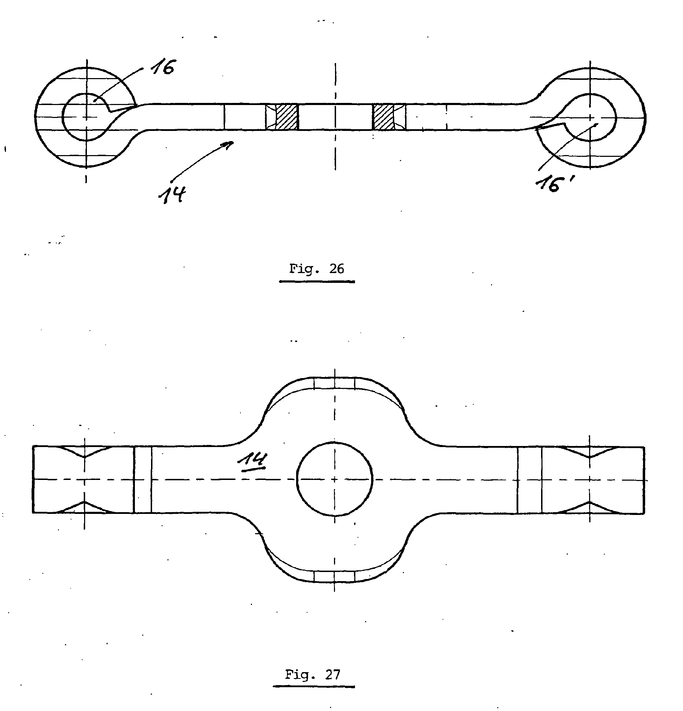

Die Figuren 17 und 18 zeigen Kugelhalbschalen 12 im zusammengebauten Zustand (Fig. 17) mit Einleger 14 und dessen Ösen 16, 16' am Ende der seitlichen Arme 15, 15' im Gummipack 11 und innerhalb der Gehäuseringe 25, 25', sowie die Kugelhalbschalen des Kugelstücks 10 in Draufsicht (Fig. 18). In den Figuren 26 und 27 ist der Einleger 14 vergrößert gezeichnet.

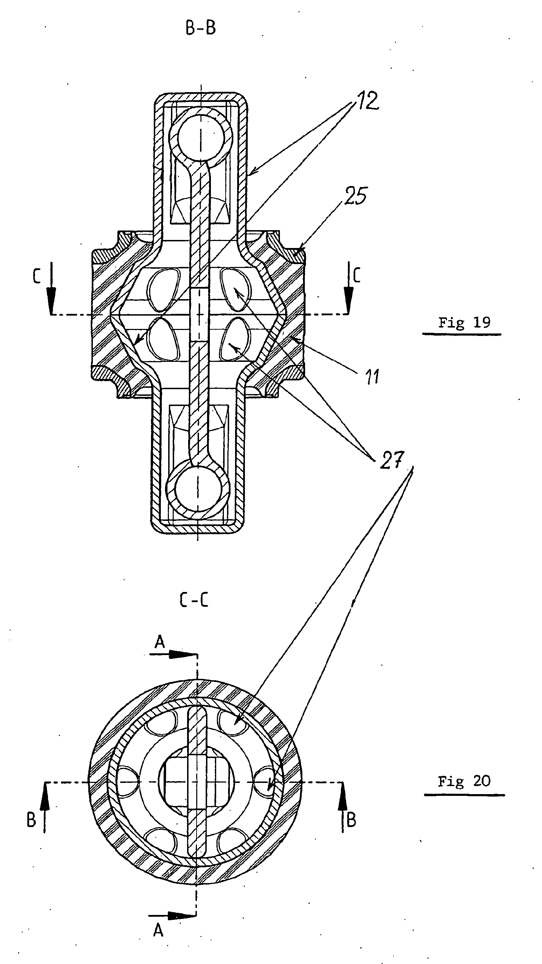

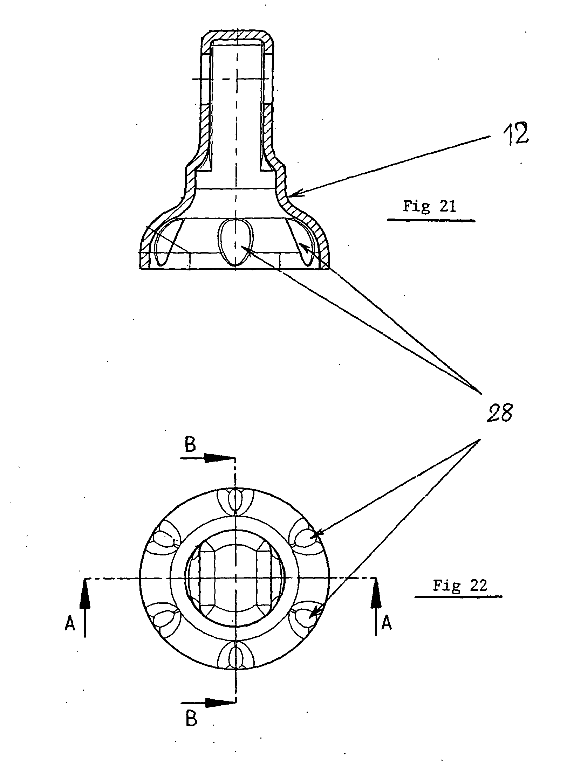

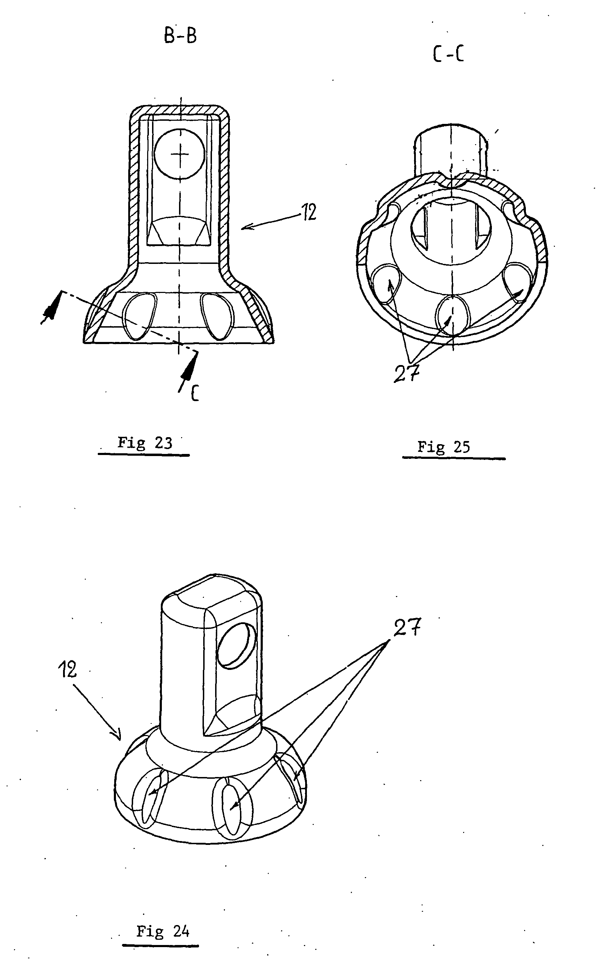

Die Figuren 19 und 20 zeigen Kugelhalbschalen 12 in etwas anderer Formgebung, mit konischen Enden an der Trennebene C-C. Weiterhin zeigt die Ausführungsform der Figuren 19 und 20 Eindrückungen 27 an den konischen Endbereichen der Kugelhalbschalen 12, was infolge von Druckaufbau in den Gummischichten dem noch besseren Halt des Gummipacks 11 dient. Die Kugelhalbschalen 12 der Figuren 21 und 22 zeigen dagegen Ausbuchtungen 28 , die einem gleichen Zweck dienen und einem Verschleiß vorbeugen.
Und schließlich zeigen die Figuren 23 bis 25 Kugelhalbschalen 12 mit geringfügig geänderter Formgebung der Eindrückungen 27, wie dies bestens aus der unterseitigen Ansicht der Fig. 25 erkennbar ist.

Die erfindungsgemäße Ausbildung von Konstruktionselementen der Lenkeinrichtung eines Fahrzeuges entsprechend den Figuren 1 bis 29, erhöht signifikant die Fahrsicherheit und reduziert das Gewicht der schwingenden Massen insbesondere der Elemente der Lenkeinrichtung, was mit einer besseren Bodenhaftung des Fahrzeugs einen wesentlichen Vorteil ergibt.

Weitere Vorteile der Konstruktion nach der Erfindung sind folgende:
- Der Mittenabstand von Kugelstück zu Kugelstück ergibt einen Toleranzbetrag von +/-0,15 mm;
- infolgendessen entfällt ein wartungsträchtiger Verstellmechanismus;
- die Schalenkonstruktion des Querlenkers aus St-Blech bewirkt, dass alle Spannungskräfte genau im Mittelpunkt des Querlenkers wirken, d.h. die Kraftlinien verlaufen absolut parallel.
- der bisher mögliche Kugelschalenbruch ist durch einstückig gestanzte Schalenbauweise unmöglich gemacht;
- infolge des angewandten Tiefziehverfahrens der wesentlichen Elemente des Querlenkers bei Beachtung des Faserverlaufs der Halbschalenteile erübrigen sich mechanische Nachbearbeitungen und wird Bruchgefahr restlos überwunden;
- durch weitestgehende Gummierung bzw. Ausschäumung von Hohlräumen mit Dämmstoffen bzw. mit Alu wird eine deutliche Verminderung von Fahrgeräuschen erzielt;
- die durch die erfindungsgemäße Formgebung der Einzelteile eines Quedenkers vergrößerte umlaufende Linie im Scheitelpunkt des Kugelstückes verhindert weitestgehend eine Zerbröselung der Gummischichten im Kugelkopf;
- insgesamt beträgt die wirksame Gewichtsverminderung der Bauteile des schwingenden Systems mindestens 40 %.

Mit der erfindungsgemäßen Bauweise der Lenkeinrichtung bzw. schwingender Federachsen wird somit ein deutlicher technischer Fortschritt u. a. mit deutlicher Verbesserung der Fahrsicherheit erreicht.

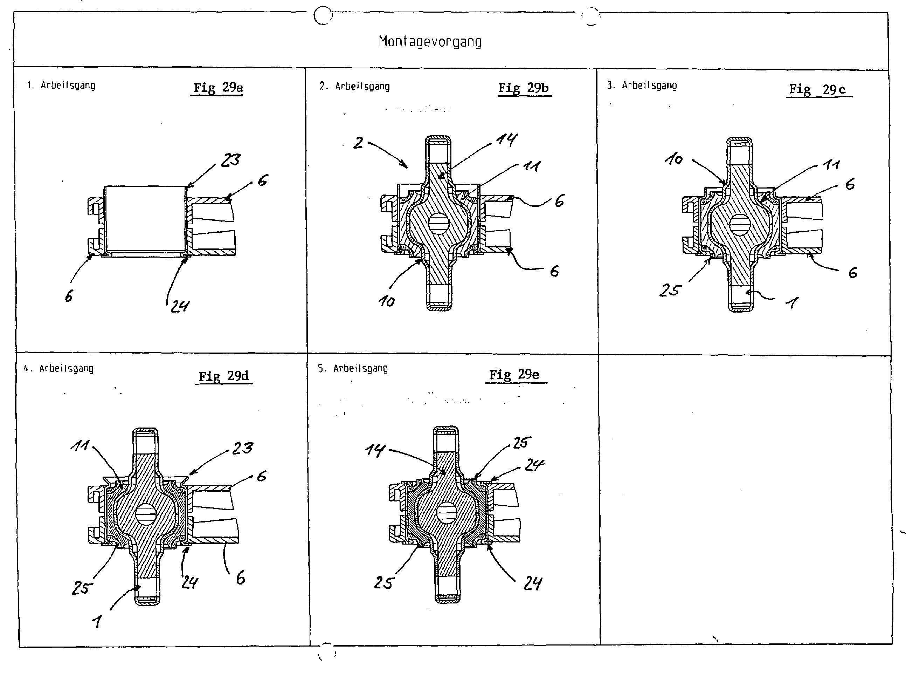

Die Montage der Teile eines Querlenkers zeigen die Figuren 28 und 29a bis 29e. Gemäß Figur 28 umfaßt der Querlenker 2 der Figur 1 je eine vorgummierte und eine ungummierte blechverformte Querlenkerhälfte mit entständigen Augen. Darin eingebettet befindet sich der Gelenkkopf in Form einer gummierten Einheit mit Einleger, eingefaßt durch ein von Kugelhalbschalen 12 gebildetes Kugelstück 10. Die Teile werden nach Zusammenbau durch Anbringen eines Bördelverschlusses der Spannhülse 23 unverrückbar fest und toleranzgenau miteinander vereinigt.

Dazu ist aus den Fig. 29a bis 29e der entsprechende Montagevorgang mit einer Folge von fünf Arbeitsschritten ersichtlich.

Diese beginnen gemäß Figur 29a mit dem Einpressen der einseitig gebördelten Spannhülse 23 gemäß Fig. 8, 8a in das Gehäuse 3 des aus den Pressteilen 6 bestehenden Querlenkers, gefolgt von dem Einfügen des Gummipaketes 11 mit Gehäusering 25 am Kugelstück 10 des Gelenkkopfes 2 im zweiten Arbeitsgang gemäß Fig. 29b. Das gummierte Kugelstück 10 mit den Befestigungselementen 1 und mit dem Einleger 14 ist vormontiert.

Sodann wird im dritten Arbeitsgang gem. Fig. 29c die Spannhülse 23 unter Erzeugung einer inneren Vorspannung im Gummipaket 10 von ca. 5t zunächst am freien Ende verjüngt.
In einem weiteren Arbeitsschritt gem. Fig. 29d wird die verjüngte Spannhülse zunächst aufgetrichtert, um abschließend im letzten Arbeitsgang in Form eines endgültig verschlossenen Spannhülsenverschlusses unter Erzeugung einer unveränderbaren Vorspannung im E-Modulbereich zugebördelt zu werden, siehe Fig. 29e. Die Bördelränder 24 stützen sich dabei einerseits an den metallenen Gehäuseringen 25 mechanisch ab und liegen andererseits auf den Kopfenden des Querlenkers spielfrei auf.

Dieser Spezialverschluß zum Vorspannen und Verbindung am Querlenker-Kugelgelenk ermöglicht eine lückenlose Umschließung eines vorgespannten Gummipaketes, sodass ein Systemausfall durch Ausrasten eines (nicht mehr vorhandenen) verschobenen Seegerringes verhindert wird.

### Bezugszeichenverzeichnis

- 1.: Befestigungselement
- 2.: Gelenkkopf
- 3.: Gehäuse
- 4.: Schaft
- 5.: Spurstange, Querlenker (variable Länge)
- 6.: Blechpressteil
- 7.: Trennebene (längs)
- 8.: elastische Schicht
- 9.: Verbreiterung
- 10.: Kugelstück
- 11.: elastische Packung, Gummipack
- 12.: Kugelhalbschale
- 13.: Trennebene (quer)
- 14.: Einleger
- 15.: seitliche Arme
- 16.: Ösen
- 17.: Schalenbereich
- 18.: Spurstange, Querlenker
- 19.: Distanzstück
- 20.: Querlenkerhälfte
- 21.: rohrförmige Einheit
- 22.: Kugelschale
- 23.: Spannhülse
- 24.: Bördelränder
- 25.: Gehäusering
- 26.: Gehäuseendteil
- 27.: Eindrückungen
- 28.: Ausbuchtungen
- 29.: Hohlzylinder
- 30.: Hohlzylinder-Außenwand
- 31.: Hohlzylinder-Innenwand
- 32.: Eintauchtiefe

## Patentansprüche

1. Konstruktionselement der Lenkreinrichtung eines Fahrzeugs, insbesondere eine Spurstange/Querlenker mit mindestens einem wenigstens ein Befestigungselement (1) aufweisenden Gelenkkopf (2) mit einem diesen kraft-und/oder formschlüssig umfassenden Gehäuse (3) und einem daran anordenbaren Schaft (4), insbesondere für die Ausbildung der Lenkgeometrie eines Fahrzeugs bzw. zum Anschluss von Gelenkstützen bspw. zwischen einer schwingbaren Achse und einem Fahrgestell, wobei der Gelenkkopf (2) mit Kugelstück (10) und Befestigungselementen (1) und/oder das Gehäuse (3) mit Schaft (4) aus insbesondere schalenförmigen Blechpressteilen (6) zusammengefügt sind, die im Bereich jeweils einer Trennebene (7, 13) unter Ausbildung wenigstens teilweise hohler Elemente miteinander fest verbunden, insbesondere mindestens partiell verschweißt sind,
**dadurch gekennzeichnet,**
**dass** der Gelenkkopf (2), umfassend das Kugelstück (10) mit zwei antipodischen Befestigungselementen (1, 1'), aus zwei Kugelhalbschalen (12, 12') besteht, die an einer kugelhalbierenden Trennebene (13) fest verbunden, ggf. verschweißt sind und
**dass** das Kugelstück (10) und die davon auskragenden Befestigungselemente (1, 1') einen Einleger (14) aus Dickblech enthalten, dessen seitliche Arme (15, 15') zu lastaufnehmenden Ösen (16, 16') geformt sind.

2. Konstruktionselement nach Anspruch 1,
**dadurch gekennzeichnet,**
**dass** in Abstandsbereichen zwischen Kugelstück (10) und Gehäuse (3) beim Gelenkkopf (2) oder Teilen des Gehäuses (3) aufvulkanisierte bzw. aufgeklebte Schichten (8) aus elastischem Material wie Gummi oder Kunststoff vorhanden sind.

3. Konstruktionselement nach Anspruch 1 oder 2,
**dadurch gekennzeichnet,**
**dass** Hohlräume zwischen Teilen des Gelenkes bzw. innerhalb desselben mit elastischem Material ausgeschäumt sind.

4. Konstruktionselement nach einem oder mehreren der Ansprüche 1 bis 3,
**dadurch gekennzeichnet,**
**dass** es mit einer am Schaft (4) einstückig unter Ausbildung des Gehäuses (3) vorhandenen Verbreiterung (9) den Gelenkkopf (2) umfasst, der als Kugelstück (10) mit quer zum Schaft (4) angeordneten Befestigungselementen (1, 1') ausgebildet und mit einer ihn umhüllenden Packung (11) aus elastischem Material wie Gummi oder Kunststoff versehen ist.

5. Konstruktionselement nach einem oder mehreren der Ansprüche 1 bis 4,
**dadurch gekennzeichnet,**
**dass** zumindest der Hohlraum zwischen dem Einleger (14) und der Schale (17) des Kugelstücks (10) mit Aluminium ausgeschäumt ist.

6. Konstruktionselement nach einem oder mehreren der Ansprüche 1 bis 5,
**dadurch gekennzeichnet,**
**dass** es als Querlenker mit fester Länge ausgebildet ist.

7. Konstruktionselement nach einem oder mehreren der Ansprüche 1 bis 6,
**dadurch gekennzeichnet,**
**dass** es mittels auf einem ggf. rohrförmigen Distanzstück (19) abstandsveränderlich teleskopierend schiebbarer ggf. hohl ausgebildeter Schäfte (4, 4') als Querlenker (18) mit variabler Länge ausgebildet ist.

8. Konstruktionselement nach einem oder mehreren der Ansprüche 1 bis 7,
**dadurch gekennzeichnet,**
**dass** der mit fester Länge ausgebildete Querlenker (18) bzw. jeweils eine der längenvariablen Querlenkerhälften (20, 20') aus je zwei zu einer rohrförmigen Einheit (21) zusammenfügbaren halbschalenförmigen Blechpressteilen (6, 6') besteht.

9. Konstruktionselement nach einem oder mehreren der Ansprüche 1 bis 8,
**dadurch gekennzeichnet,**
**dass** die Verbreiterung (9) am Ende eines jeden Blechpressteils (6, 6') einen das Kugelstück (10) aufnehmenden Hohlzylinder (29, 29') umfasst, dessen eine Stirnseite achsfluchtend und beabstandet der Stirnseite des durchmessergleichen Hohlzylinders (29') des anderen Blechpressteils (6') gegenüberliegt.

10. Konstruktionselement nach einem oder mehreren der Ansprüche 1 bis 9,
**dadurch gekennzeichnet,**
**dass** die Verbreiterung (9) am Ende eines jeden Blechpressteils (6, 6') einen das Kugelstück (10) aufnehmenden Hohlzylinder (29, 29') mit unterschiedlich großem Durchmesser umfasst, wobei die Innenwand des Hohlzylinders (29') des einen Blechpressteils (6') die Außenwand des Hohlzylinders (29) des anderen Blechpressteils (6) zumindest teilweise achsfluchtend übergreift.

11. Konstruktionselement nach Anspruch 10,
**dadurch gekennzeichnet,**
**dass** Außenwand (30) und übergreifende Innenwand (31) mit einem Passsitz formschlüssig in Verbindung stehen.

12. Konstruktionselement nach Anspruch 10 oder 11,
**dadurch gekennzeichnet,**
**dass** die Eintauchtiefe der Hohlzylinder (29, 29') etwa in der Trennebene (7) der halbschalenförmigen Blechpressteile (6, 6') liegt.

13. Konstruktionselement nach einem oder mehreren der vorhergehenden Ansprüche,
**dadurch gekennzeichnet,**
**dass** die Trennebene (7) der zusammenfügbaren Blechpressteile vor deren endseitigen Verbreiterung (9) endet.

14. Konstruktionselement nach einem oder mehreren der Ansprüche 1 bis 13,
**dadurch gekennzeichnet,**
**dass** das den Gelenkkopf (2) an den Enden jedes Querlenkers aufnehmende Gehäuse (3) zwei ringförmige Gehäuseringe (25) aufweist, die zur Aufnahme eines gummierten Kugelstückes (10) ausgebildet und zwischen den verbreiterten Querlenker-Enden (18) einspannbargehalten sind.

15. Konstruktionselement nach einem oder mehreren der Ansprüche 1 bis 14,
**dadurch gekennzeichnet,**
**dass** zwischen dem Gelenkkopf (2) und dem Gehäuse (3) eine vergleichsweise dünnwandige Spannhülse (23) mit seitlichen Bördelrändern (24, 24') eingelegt ist.

16. Konstruktionselement nach einem oder mehreren der Ansprüche 1 bis 15,
**dadurch gekennzeichnet,**
**dass** der Querlenker (18) mit einem elastischen Gummimaterial, mit Kunststoff oder mit einem sonstigen Korrosion verhindernden oder vermindernden Material umgeben ist.

17. Verfahren zur Montage des Konstruktionselementes mit den Merkmalen nach den Ansprüchen 1 bis 16,
**dadurch gekennzeichnet,**
**dass** zunächst ein Einleger (14) in eine der Kugelhalbschalen (12) eingesteckt wird, wonach je zwei Kugelhalbschalen (12, 12') miteinander verschweißt werden, sodass ein Kugelstück (10) aus St-Blech gefertigt ist und der Einleger (14) zur Kraftaufnahme dient; daraufhin erfolgt das Glätten insbesondere der Schweißnähte; sodann wird auf das Kugelstück (10) die Gummipackung (11) aufgebracht und mit den Gehäuseringen (25) versehen; dann wird die Spannhülse (23), ggf. mit Bördelrand (24) versehen, in die Querlenkerhälften (6) eingepresst, das Kugelstück in die Spannhülse geschoben und die Spannhülse danach zugebördelt.

18. Montageverfahren nach Anspruch 17,
**dadurch gekennzeichnet,**
**dass** zum Einpressen die Spannhülse (23) verjüngt wird und eine Vorspannung für das Gummipaket von ca. 5 t aufgebracht wird, dass die verjüngte Spannhülse aufgetrichtert wird und schließlich durch zubördeln der Spannhülsenverschluss unter Vorspannung im E-Modulbereich hergestellt wird.

19. Montageverfahren nach Anspruch 17 oder 18,
**dadurch gekennzeichnet,**
**dass** die Querlenker-Halbschalen (6, 6') vor und/oder nach der Verbindung mit dem Gelenkkopf (2) fest miteinander verschweißt werden.

20. Montageverfahren nach Anspruch 17, 18 oder 19,
**dadurch gekennzeichnet,**
**dass** die Querlenker-Halbschalen (6, 6') entlang der Trennebene (7) verschweißt sind und im Bereich ihrer Verbreiterung (9) mittels eines Passsitzes miteinander verbunden werden.

21. Montageverfahren nach Anspruch 20,
**dadurch gekennzeichnet,**
**dass** die Schweißverbindung entlang der Trennebene (7) der Querlenker-Halbschalen (6, 6') mittels Hochtemperaturplasma, vorzugsweise mit einem düsenfernen Wirkfocus vorgenommen wird.

22. Montageverfahren nach Anspruch 17,
**dadurch gekennzeichnet,**
**dass** die Schweißverbindung entlang der Trennebene (13) der Kugelhalbschalen (12, 12') mittels Hochtemperaturplasma vorzugsweise mit einem düsenfernen Wirkfocus vorgenommen wird.

## Claims

1. A construction member for the steering mechanism of a motor vehicle, particularly a tie rod/wishbone with at least one swivel head (2) having at least one fixing element (1) encircled in positive and/or non-positive locking manner by a casing (3) and a shaft (4) that is mountable thereon, particularly to create the steering geometry of a motor vehicle and/or for connecting articulated columns e.g. between a swing axle and a chassis, wherein the swivel head (2) with ball socket (10) and fixing elements (1) and/or the casing with shaft (4) are joined particularly by concave sheet metal stamped parts (6), which are permanently attached, particularly at least partly welded to each other in the region of one parting plane (7, 13) in each case, forming are least partly hollow elements,
**characterised in that**
the swivel head (2) encompassing the ball socket (10) with two antipodal fixing elements (1, 1') is constructed from two hemispherical shells (12, 12') that are permanently attached, possibly welded, on a parting plane (13) bisecting the sphere, and
the ball socket (10) and the fixing elements (1. 1') protruding therefrom contain an inlay (14) made from heavy plate, the lateral arms (15, 15') of which are shaped to form load-bearing eyes (16, 16').

2. The construction member as recited in claim 1,
**characterised in that**
layers (8) made from an elastic material such as rubber or plastic are vulcanised or bonded on at the swivel head (2) or parts of the casing (3) in spacing areas between the ball socket (10) and the casing (3).

3. The construction member as recited in claim 1 or 2,
**characterised in that**
elastic material is foamed-in-place in the cavities between parts of the articulated joint and/or within the joint.

4. The construction member as recited in one or more of claims 1 to 3,
**characterised in that**
it encircles the swivel head (2) with a flared section (9) that is integral with the shaft (4) to form the casing (3), and which is conformed as a ball socket (10) having fixing elements (1, 1') arranged perpendicularly to the shaft (4), and is furnished with a gasket (11) made from elastic material such as rubber or plastic.

5. The construction member as recited in one or more of claims 1 to 4,
**characterised in that**
aluminium is foamed in place in at least the cavity between the inlay (14) and the concave portion (17) of the ball socket (10).

6. The construction member as recited in one or more of claims 1 to 5,
**characterised in that**
it is constructed as a wishbone having a fixed length.

7. The construction member as recited in one or more of claims 1 to 6,
**characterised in that**
it is constructed as a wishbone (18) with variable length due to shafts (4, 4') that are possibly of concave design and are telescopically slidable on a possibly tubular spacer (19) for variable separation.

8. The construction member as recited in one or more of claims 1 to 7,
**characterised in that**
the wishbone (18) constructed with fixed length or one each of the variable-length wishbone halves (20, 20') is constructed from two concave sheet metal stamped parts (6, 6'), each of which can be joined to form a tubular unit.

9. The construction member as recited in one or more of claims 1 to 8,
**characterised in that**
the flared sections (9) at the end of each sheet metal stamped part (6, 6') encompass a hollow cylinder (29, 29') accommodating the ball socket (10), one surface of which is situated opposite the surface of the hollow cylinder (29') with the same diameter on the other sheet metal stamped part (6'), and is axially aligned therewith and at a distance therefrom.

10. The construction member as recited in one or more of claims 1 to 9,
the flared sections (9) at the end of each sheet metal stamped part (6, 6') encompass a hollow cylinder (29, 29') having diameters of different sizes to accommodate the ball socket (10), wherein the inner wall of the hollow cylinder (29') of the one sheet metal stamped part (6') at least partly overlaps the outer wall of the hollow cylinder (29) of the other sheet metal stamped part (6) and is axially aligned therewith.

11. The construction member as recited in claim 10,
**characterised in that**
the outer wall (30) and the overlapping inner wall (31) are in positive locking connection with a snug fit.

12. The construction member as recited in claim 10 or 11,
**characterised in that**
the engaging depth of the hollow cylinders (29, 29') is located approximately along the parting plane (7) of the hemispherical sheet metal stamped parts (6, 6').

13. The construction member as recited in any of the preceding claims,
**characterised in that**
the parting plane of the two joinable sheet metal stamped parts (6, 6') ends before the flared sections (9) at the extremities thereof.

14. The construction member as recited in one or more of claims 1 to 13,
**characterised in that**
the casing (3) that accommodates the swivel head (2) at the ends of each wishbone has two annular casing rings (25) that are constructed to accommodate a rubberised ball socket (10) and are retained in clamped manner between the flared ends (18) of the wishbone.

15. The construction member as recited in one or more of claims 1 to 14,
**characterised in that**
a relatively thin-walled collet sleeve (23) with lateral beaded edges (24, 24') is inserted between the swivel head (2) and the casing (3).

16. The construction member as recited in one or more of claims 1 to 15,
**characterised in that**
the wishbone (18) is surrounded by an elastic rubber material, a plastic, or other substance that prevents or reduces corrosion.

17. A method for assembling the construction member having the features as recited in claims 1 to 16,
**characterised in that**
an inlay (14) is first inserted in one of the hemispherical shells (12), then two hemispherical shells (12, 12') are welded together in each case to produce a socket joint (10) made from sheet steel and the inlay (14) serves to absorb forces; this is followed by smoothing, particularly of the weld seams; the rubber gasket (11) is then placed on the socket joint (10) and provided with the casing rings (25); then the collet sleeve (23), possibly furnished with a beaded edge (24), is pressed into the wishbone halves (6), the socket joint is pushed into the collet sleeve, and the collet sleeve is closed by crimping.

18. The assembly method as recited in claim 17,
**characterised in that**
the collet sleeve (23) is tapered to facilitate insertion and an pretension of about 5 t is applied for the rubber gasket, the tapered collet sleeve is opened out, and finally the collet sleeve closure is created by crimping with pretension in the range of the modulus of elasticity.

19. The assembly method as recited in claim 17 or 18,
**characterised in that**
the wishbone hemispheres (6, 6') are permanently welded together before and/or after the connection to the swivel head (2).

20. The assembly method as recited in claims 17, 18, or 19,
**characterised in that**
the wishbone hemispheres (6, 6') are welded along the parting plane (7) and are attached to each other with a snug fit in the flared areas (9) thereof.

21. The assembly method as recited in claim 20,
**characterised in that**
the join is made along the parting plane (7) of the wishbone hemispheres (6, 6') with a high-temperature plasma weld, preferably with a welding focus at a distance from the nozzle.

22. The assembly method as recited in claim 17,
**characterised in that**
the join is made along the parting plane (13) of the ball socket hemispheres (12, 12') with a high-temperature plasma weld, preferably with a welding focus at a distance from the nozzle.

## Revendications

1. Elément de construction du dispositif de direction d'un véhicule en particulier une barre d'accouplement/tirant de stabilisation avec au moins une tête d'articulation (2) présentant un élément de fixation (1) et entouré par un boîtier (3) par adhérence mécanique et/ou de forme et un arbre (4) disposé dessus, en particulier pour la réalisation de la géométrie de direction d'un véhicule respectivement pour le raccordement de béquilles articulées respectivement entre un axe pivotant et un bâti, la tête d'articulation (2) avec des pièces sphériques (10) et des éléments de fixation (1) et/ou le carter (3) avec l'arbre (4) étant assemblée en particulier à partir de pièces de tôle pressée (6) en forme de coque qui sont reliées fixement ensemble dans la zone respective d'un plan de séparation (7, 13) en formant au moins partiellement des éléments creux, en particulier sont au moins partiellement soudées,
**caractérisé en ce que**
la tête d'articulation (2), comprenant la pièce sphérique (10) avec deux éléments de fixation antipodiques (1, 1") se compose de deux coques hémisphériques (12, 12') qui sont fixées fixement à un plan de séparation (13) de demi-sphères, éventuellement soudées et
**en ce que** la pièce sphérique (10) et les éléments de fixation faisant saillie (1, 1') contiennent un insert (14) en tôle épaisse dont les bras latéraux (15, 15') sont moulés pour former des oeillets supportant la charge (16, 16').

2. Elément de construction selon la revendication 1, **caractérisé en ce que** dans des zones de distance entre la pièce sphérique (10) et le carter (3), au niveau de la tête d'articulation (2) ou des parties du carter (3), il se trouve des couches vulcanisées ou collées (8) en matériau élastique tel que le caoutchouc ou une matière synthétique.

3. Elément de construction selon la revendication 1 ou 2, **caractérisé en ce que** des cavités entre des parties de l'articulation respectivement à l'intérieur de cette dernière sont moussées avec du matériau élastique.

4. Elément de construction selon l'une ou plusieurs des revendications 1 à 3, **caractérisé en ce qu'**il comprend avec un élargissement (9) réalisé d'un seul tenant sur le bras (4) en formant le carter (3), la tête d'articulation (2) qui est réalisée en tant que pièce sphérique (10) avec des éléments de fixation (1, 1') disposés transversalement au bras (4) et qui est munie d'une enveloppe l'entourant (11) en matériau tel que le caoutchouc ou la matière synthétique.

5. Elément de construction selon l'une ou plusieurs des revendications 1 à 3, **caractérisé en ce qu'**au moins la cavité entre l'insert (14) et la coque (17) de la pièce sphérique (10) est moussée à l'aluminium.

6. Elément de construction selon l'une ou plusieurs des revendications 1 à 5, **caractérisé en ce qu'**il est réalisé comme un tirant de stabilisation avec une longueur fixe.

7. Elément de construction selon l'une ou plusieurs des revendications 1 à 5, **caractérisé en ce qu'**il est réalisé au moyen d'arbres (4; 4') de forme creuse éventuellement coulissants de manière télescopique à distance variable sur une pièce d'écartement (19) éventuellement tubulaire en tant que tirant de stabilisation (18) de longueur variable.

8. Elément de construction selon l'une ou plusieurs des revendications 1 à 8, **caractérisé en ce que** le tirant de stabilisation (18) de longueur fixe respectivement une des moitié de tirant de stabilisation de longueur variable (20, 20') se compose de deux pièces de tôle pressée (6. 6') en forme de demi-coque assemblables en une unité tubulaire (21).

9. Elément de construction selon l'une ou plusieurs des revendications 1 à 8, **caractérisé en ce que** l'élargissement (9) comprend sur l'extrémité de chaque tôle pressée (6. 6') un cylindre creux (29, 29') logeant la pièce sphérique (10) dont une face frontale est opposée à la face frontale du cylindre creux de diamètre identique (29') de l'autre pièce de tôle pressée (6') alignée axialement et à distance.

10. Elément de construction selon l'une ou plusieurs des revendications 1 à 8, **caractérisé en ce que** l'élargissement (9) comprend sur l'extrémité de chaque tôle pressée (6. 6') un cylindre creux (29, 29') logeant la pièce sphérique (10) de diamètre de taille différente, la paroi interne du cylindre creux (29') d'une pièce de tôle pressée (6') recouvrant la paroi externe du cylindre creux (29) de l'autre pièce de tôle pressée (6) au moins partiellement alignée axialement.

11. Elément de construction selon la revendication 10, **caractérisé en ce qu'**une paroi externe (30) et une paroi interne chevauchante (31) sont connectées à un ajustement par complémentarité de forme.

12. Elément de construction selon la revendication 10, **caractérisé en ce que** la profondeur d'engagement des cylindres creux (29, 29') se situe approximativement dans le plan de séparation (7) des pièces de tôle pressée en forme de demi-coque (6, 6').

13. Elément de construction selon l'une des revendications précédentes, **caractérisé en ce que** le plan de séparation (7) des parties de tôles pressées assemblables se termine devant leur élargissement d'extrémité (9).

14. Elément de construction selon l'une ou plusieurs des revendications 1 à 13, **caractérisé en ce que** le carter (3) logeant la tête d'articulation (2) aux extrémités de chaque tirant de stabilisation présente deux anneaux annulaires de carter (25) qui sont réalisés pour le logement d'une pièce sphérique caoutchoutée (10) et sont maintenues par serrage ente les extrémités élargies de tirant de stabilisation (18) s'élargissant.

15. Elément de construction selon l'une ou plusieurs des revendications 1 à 1$, **caractérisé en ce qu'**entre la tête d'articulation (2) et le carter (3) il est inséré une douille de serrage de paroi comparativement fine (23) avec des bords relevés latéraux (24, 24').

16. Elément de construction selon une ou plusieurs des revendications 1 à 14, **caractérisé en ce que** le tirant de stabilisation (18) est entouré d'un matériau élastique en caoutchouc, de matière synthétique ou d'un matériau atténuant ou évitant la corrosion.

17. Procédé pour le montage de l'élément de construction avec les constructions des revendications 1 à 16,
**caractérise en ce que** l'insert (14) est introduit dans l'une des demi-coques sphériques (12), sur quoi deux demi-coques sphériques (12, 12') étant soudées ensemble de sorte qu'une pièce sphérique (10) est fabriquée à partir d'une pièce de tôle et l'insert (14) sert à absorber la force, il est ensuite procédé en particulier au lissage des soudures, et le paquet de caoutchouc (11) est appliqué sur la pièce sphérique (10) et est muni d'anneaux de carter (25), la douille de serrage (23) est éventuellement munie de bords sertis (24), est pressée dans des moities de tirant de stabilisation (6), la pièce sphérique est introduite dans la douille de serrage et la douille de serrage est ensuite fermée par sertissage.

18. Procédé de montage selon la revendication 17, **caractérisé en ce que** pour le pressage, la douille de serrage (23) est effilée et une précontrainte d'environ 5 tonnes est appliquée pour le paquet de caoutchouc, **en ce que** la douille de serrage effilée obtient une forme d'entonnoir et la fermeture de douille de serrage est réalisée par sertissage de sous précontrainte dans la plage du module E.

19. Procédé de montage selon la revendication 17 ou 18, **caractérisé en ce que** les demi-coques de tirant de stabilisation (6, 6') sont soudées fixement entre elles avant et/ou après la connexion avec la tête d'articulation (2).

20. Procédé de montage selon la revendication 17, 18 ou 19, **caractérisé en ce que** les demi-coques de tirant de stabilisation (6, 6') sont soudées le long du plan de séparation (7) et sont reliées ente elles dans la zone de leur élargissement (9) au moyen d'un siége ajusté.

21. Procédé de montage selon la revendication 20, **caractérisé en ce que** la connexion par soudure le long du plan de séparation (7) des demi-coques de tirant de stabilisation (6, 6') est effectuée au moyen de plasma à haute température, de préférence par un foyer d'action éloigné des buses.

22. Procédé de montage selon la revendication 17, **caractérisé en ce que** la connexion par soudure le long du plan de séparation (13) des demi-coques de tirant de stabilisation (12, 12') est effectuée au moyen de plasma à haute température, de préférence par un foyer d'action éloigné des buses.
